Europäisches Patentamt

**European Patent Office**

Office européen des brevets

(19)

(11) Veröffentlichungsnummer : **0 119 960 B1**

(12) **EUROPÄISCHE PATENTSCHRIFT**

(45) Veröffentlichungstag der Patentschrift :
04.03.87

(21) Anmeldenummer : **84810120.0**

(22) Anmeldetag : **13.03.84**

(51) Int. Cl.⁴ : **F 16 K 27/04**, F 16 K 11/00,
E 03 C   1/042, F 16 K 11/06

(54) Sanitär-Armaturanschlussorgan.

(30) Priorität : 16.03.83 CH 1501/83
　　　　　　　16.03.83 CH 1502/83
　　　　　　　29.06.83 CH 3557/83

(43) Veröffentlichungstag der Anmeldung :
26.09.84 Patentblatt 84/39

(45) Bekanntmachung des Hinweises auf die Patenterteilung : 04.03.87 Patentblatt 87/10

(84) Benannte Vertragsstaaten :
AT BE CH DE FR GB IT LI LU NL SE

(56) Entgegenhaltungen :
CH-A-　358 293
CH-A-　635 179
DE-A- 2 324 023
DE-A- 2 930 518
DE-B- 1 217 718
FR-A- 1 451 052
FR-A- 2 384 184
US-A- 3 408 099
US-A- 3 583 004
US-A- 3 674 048
US-A- 3 823 737
US-A- 4 022 242
US-A- 4 243 063
US-A- 4 362 186

(73) Patentinhaber : **Hussauf, Walter**
**Fistelstrasse**
**CH-8497 Fischenthal (CH)**

(72) Erfinder : **Hussauf, Walter**
**Fistelstrasse**
**CH-8497 Fischenthal (CH)**

(74) Vertreter : **Bosshard, Ernst**
**Schulhausstrasse 12**
**CH-8002 Zürich (CH)**

**Beschreibung**

Die Erfindung bezieht sich auf ein Sanitär-Armaturanschlussorgan mit Kalt- und Warmwasseranschluss-Stutzen mit einem Gehäuse und einem in diesem gehaltenen Batteriestück zur Aufnahe einer Armatur, insbesondere einer Mischbatterie-Armatur, mit getrennten Kalt- und Warmwasserkanälen im Batteriestück in der Armatur.

Bekannte Armaturen sind so ausgebildet, dass die der getrennten Zuführung von Kalt- und Warmwasser dienenden Unterputz-Rohrleitungen einer Aufputzarmatur zugeleitet werden, von der das Wasser allenfalls einer Mischbatterie zugeführt wird das hernach durch einen Auslauf abfliesst.

Bei konventionellen Sanitär-Installationen werden die Zuleitungen zu den Armaturen für das Kalt- und Warmwasser von zwei Hauptsträngen abgenommen. Dies bedingt Leitungskreuzungen und je nach den örtlichen Verhältnissen relativ lange Leitungen. Die Anschlüsse handelsüblicher Armaturen sind zudem so ausgebildet, dass die Zuleitungen zu den Armaturen bestimmte Positionen einnehmen müssen, damit der Auslaufstutzen lagerichtig eingebaut werden kann, derart, dass beispielsweise der Auslauf genau nach unten gerichtet ist. Ausserdem bestehen Installationsvorschriften gemäss denen das Kaltwasser einheitlich stets auf der einen Seite und das Warmwasser stets auf der andern Seite zugeführt werden muss.

Aus der US-A 3 674 048 ist eine Armatur mit Mischventil bekannt, bei der die Kalt- und Warmwasser-Zuleitung in einen gemeinsamen Mischraum einmünden. Durch einen drehbaren Ventilkörper wird zuerst die Kaltwasser-Zufuhröffnung und hernach die Warmwasser-Zufuhröffnung frei gegeben. Falls die Kalt- und Warmwasser-Zuleitungen zur Vermeidung von Leitungskreuzungen vertauscht sind, lässt sich der Ventilkörper um 180° verdreht in das Gehäuse einsetzen.

Mit der Erfindung soll die Aufgabe gelöst werden, ein Armatur-Anschlussorgan für Sanitär-Installationen zu schaffen, bei dem Kalt- und Warmwasseranschluss eine vereinfachte, kreuzungsfreie Leitungsführung erlaubt, wobei das die Armatur aufnehmende Gehäuse mit den Anschluss-Stutzen eine beliebige Drehlage um eine zur Wand rechtwinklige Achse einnehmen kann und sich der Mischwasser-Auslauf trotzdem stets nach unten richten lässt.

Die Erfindung mit der diese Aufgabe gelöst wird, ist dadurch gekennzeichnet, dass die Armatur drehbar in eine Bohrung des Batteriestückes eingreift, dass Kalt- und Warmwasser in der Armatur getrennt über je eine Eintritts-Oeffnung mit Hohlräumen des Batteriestückes in Durchflussverbindung stehen, und je ein Hohlraum mit der Kalt- bzw. Warmwasserzufuhr in Verbindung steht, wobei die gegeneinander abgedichteten Eintritts-Oeffnungen in Axialrichtung — bezogen auf die Bohrungslängsachse des Batteriestückes — zueinander versetzt angeordnet sind und die Eintritts-Oeffnungen in die untereinander getrennten Längskanäle der Armatur in beliebiger Drehlage mit den untereinander getrennten Hohlräumen des Batteriestückes in Verbindung bleiben.

Dies bringt den Vorteil, Kalt- und Warmwasserleitungen kreuzungsfrei und mit kurzer Leitungsführung zu verlegen, ohne dass an den Armaturen, — insbesondere bei Mischbatterien — Schwierigkeiten wegen vertauscht zugeführten Kalt- und Warmwasseranschlüssen entstehen.

Die Ausbildung der Armaturanschlussorgane kann zudem mit durchgehenden Kanälen ausgeführt werden, sodass eine kreuzungsfreie Leitungsführung direkt von Armatur zu Armatur möglich ist.

Eine weitere Variante besteht darin, zusätzliche Kanäle vorzusehen für den Mischwasseranschluss einer Fussdusche und einer Brause.

In der Zeichnungs sind Ausführungsbeispiele des Erfindungsgegenstandes dargestellt. Es zeigen :

Figur 1   einen Schnitt durch das Armaturanschlussorgan bei entfernter Druckscheibe und entferntem Deckel,

Figur 2   eine Draufsicht auf den Deckel,

Figur 3   eine Ansicht einer Befestigungslasche,

Figur 4   einen Grundriss der Befestigungslasche gemäss Fig. 3,

Figur 5   eine Ansicht eines Befestigungsringes für das Gehäuse,

Figur 6   einen Schnitt nach der Linie VI-VI in Fig. 1,

Figur 7   einen Längsschnitt durch die Armatur,

Figur 8   einen Schnitt nach der Linie VIII-VIII in Fig. 5,

Figur 9   einen Längsschnitt durch eine Schlauchbefestigung am Anschluss-Stutzen des Batteriestückes,

Figur 10   einen Querschnitt nach der Linie X-X in Fig. 9,

Figur 11   einen Längsschnitt durch einen metallischen Rohranschluss am Anschluss-Stutzen des Batteriestückes,

Figur 12   einen Schnitt durch eine Ausführungsvariante mit zwei Eingangsstutzen und zwei Ausgangsstutzen nach der Linie XII-XII in Fig. 13, jedoch ohne Druckring,

Figur 13   einen Schnitt nach der Linie XIII-XIII in Fig. 12,

Figur 14   einen Schnitt nach der Linie XIV-XIV in Fig. 19,

Figur 15   einen Schnitt nach der Linie XV-XV in Fig. 19,

Figur 16   einen Schnitt nach der Linie XVI-XVI in Fig. 19,

Figur 17   einen Schnitt nach der Linie XVII-XVII in Fig. 19,

Figur 18   einen Schnitt nach der Linie XVIII-XVIII in Fig. 17,

Figur 19 einen Schnitt nach der Linie XIX-XIX in Fig. 14,

Figur 20 einen Schnitt durch eine Ausführungsvariante nach der Linie XX-XX in Fig. 21,

Figur 21 einen Schnitt nach der Linie XXI-XXI in Fig. 20,

Figur 22 einen Schnitt nach der Linie XXII-XXII in Fig. 21,

Figur 23 einen Schnitt nach der Linie XXIII-XXIII in Fig. 21,

Figur 24 einen Schnitt nach der Linie XXIV-XXIV in Fig. 22,

Figur 25 einen Schnitt nach der Linie XXV-XXV in Fig. 23,

Figur 26 einen Schnitt durch eine Ausführungsvariante mit einstückiger Armatur und Verteiler,

Figur 27 einen Schnitt durch eine Ausführungsvariante welche funktionsmässig derjenigen nach Fig. 16 entspricht,

Figur 28 einen Schnitt durch eine einstückige Ausführungsvariante, welche funktionsmässig derjenigen nach Fig. 23 entspricht.

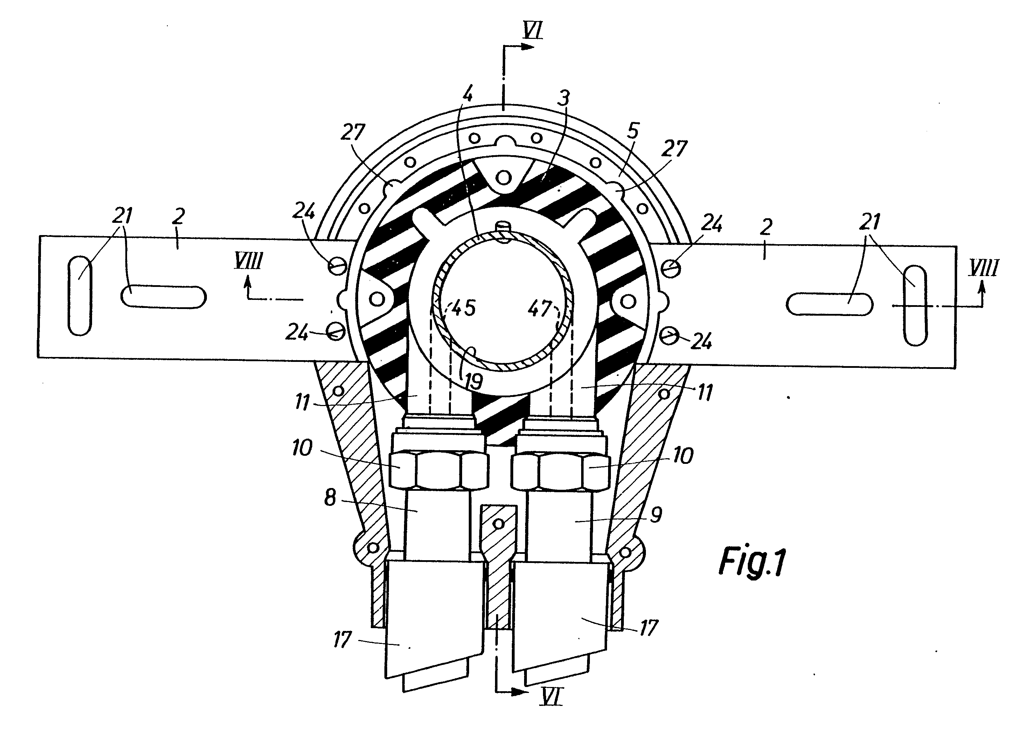

Das Sanitär-Armaturanschlussorgan gemäss Fig. 1 dient zum Anschluss einer Kalt- und Warmwasserzuleitung 8, 9. Das Wasser wird je durch Anschluss-Stutzen 11 einer Armatur zugeführt. Die Rohre 8, 9 sind von Schutzrohren 17 umgeben, welche zugleich eine Wärmedämmung bewirken. Die dichte Verbindung der Rohre 8, 9 mit den Anschluss-Stutzen 11, erfolgt je durch lösbare Ueberwurf-Verschraubungen 10. Beiden Anschluss-Stutzen 11 sind integrierende Teile eines hülsenförmigen, teilweise hohlen Batteriestückes 4.

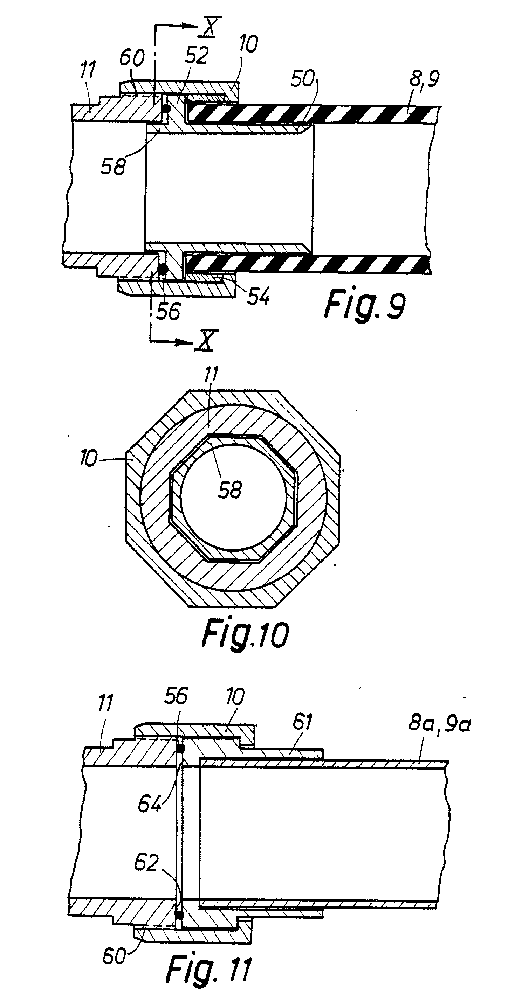

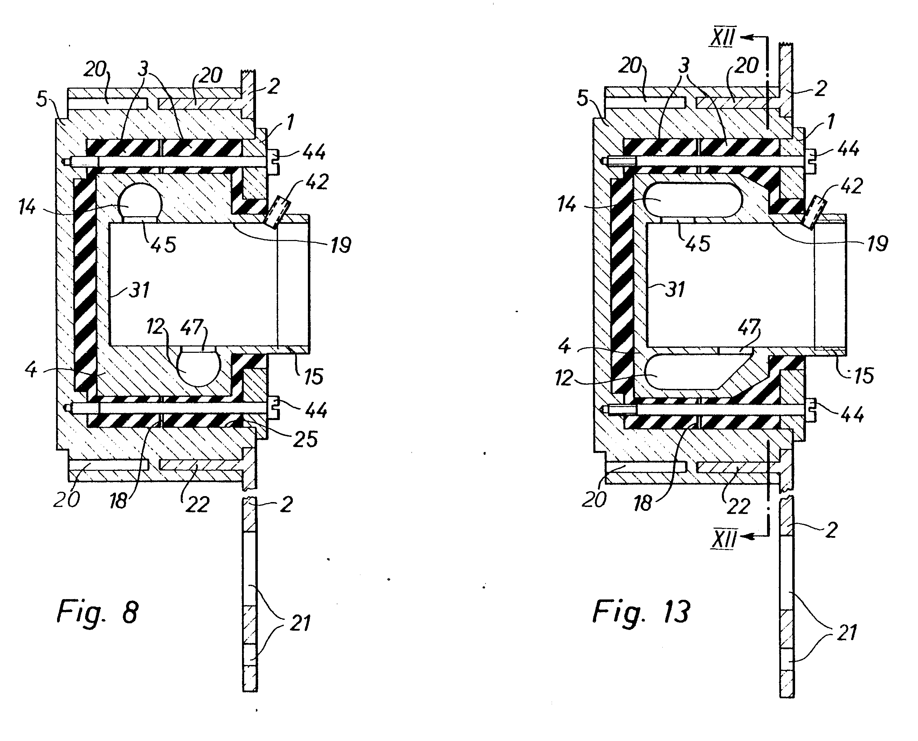

Wie aus Fig. 8 und 13 ersichtlich ist, enthält dieses Batteriestück 4 in seinem Innern zwei je mit einem der Anschluss-Stutzen 11 in Durchflussverbindung stehende Hohlräume 12, 14. Diese Hohlräume 12, 14 sind voneinander flüssigkeitsgetrennt und erstreckten sich axialversetzt bezüglich der Bohrung 19 des im wesentlichen zylindrischen Batteriestückes 4. Somit ist das Kalt- und Warmwasser in diesem Batteriestück 4 getrennt geführt und kann sich nicht mischen. Die beiden Hohlräume 12, 14 weisen je eine in die Bohrung 19 ausmündende Oeffung 45, 47 auf, die in Axialrichtung zueinander versetzt sind. Das Batteriestück 4 ist von einem Gehäuse 5 umgeben, das für Aufputz- oder Unterputzmontage verwendbar ist. Ein im Aussendurchmesser reduziertes Rohrstück 15 des Batteriestückes 4 ragt aus dem Gehäuse 5 heraus und durchdringt frontseitig einen Druckring 1. Zwischen dem Gehäuse 5 und dem Batteriestück 4 befinden sich zwei Schallschutz-Schalen 3 aus gummielastischem Material, beispielsweise aus Gummi oder einem geschäumten Kunststoff. Diese beiden Schallschutz-Schalen 3 sind in eine Gehäusebohrung 25 eingesetzt und entlang einer parallel zur Gehäusestirnseite verlaufenden Trennfuge 18 trennbar, sodass beim Zusammenbau vorerst die hintere Schale eingesetzt, sodann das Batteriestück 4 eingelegt und alsdann die vordere Schale aufgesetzt wird. Durch den Druckring 1 erfolgt ein Anpressen des Batteriestückes 4 im Gehäuse 5 mit Hilfe von Schrauben 44. Der Druckringe 1 liegt auf Schultern des Gehäuses 5 auf.

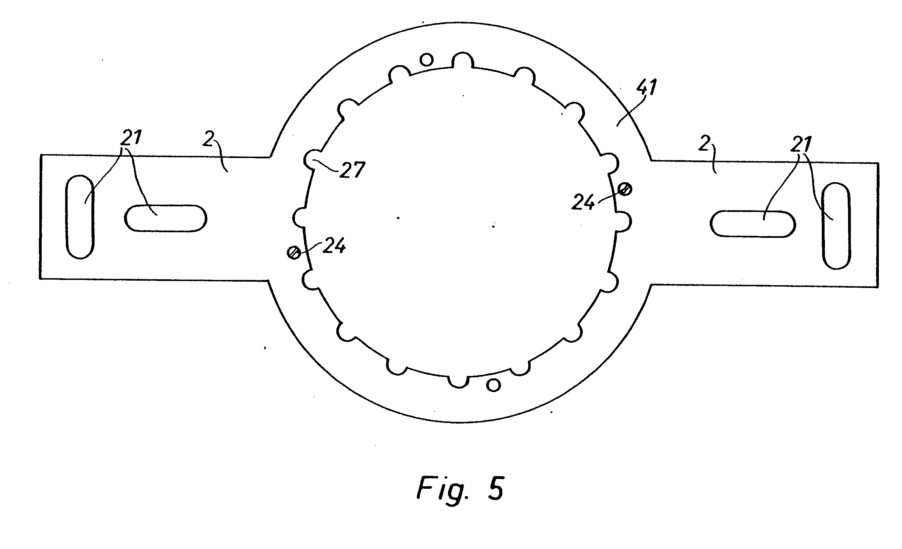

Das Gehäuse 5 wird Unterputz durch zwei sich gegenüberliegende einzelne Befestigungslaschen 2 an einer Mauer od. dgl. befestigt. Diese Befestigungslaschen 2 enthalten quer zueinander verlaufende Langlöcher 21. Jede dieser Befestigungslaschen 2 ist gemäss Fig. 4 mit einem quer abragenden Bogenstück 22 versehen, das in eine Ringnut 20 des Gehäuses 5 eingreift. Diese Ringnut 20 öffnet sich gegen die Gehäusevorderseite ; eine zweite koaxial verlaufende Ringnut 20 öffnet sich gegen die Gehäuserückseite, sodass die Befestigungslaschen 2 wahlweise entweder vorne oder hinten eingesetzt werden können. Die Befestigungslaschen 2 werden am Gehäuse 5 mit Hilfe von Schrauben 24 gehalten, welche in entsprechende Gewindelöcher im Gehäuse 5 eingreifen. Damit diese Befestigungslaschen 2 wahlweise in vorgegebenen, unterschiedlichen Winkellagen befestigbar sind, ist die Ringnut 20 mit Nocken 27 versehen, die in Abständen von 30° oder 45° vorhanden sind und in entsprechende Ausnehmungen der Befestigungslaschen 2 eingreifen. Auf diese Weise lässt sich die Lage der Befestigungslaschen 2 an die örtlichen Verhältnisse genau anpassen. Allenfalls kann auch nur eine einzige Befestigungslasche 2 verwendet werden.

Gemäss Fig. 5 ist es ferner möglich an Stelle von einzelnen, in eine Ringnut 20 eingreifende Befestigungslaschen 2 einen Befestigungsring 41 vorzusehen, von dem einstückig zwei Laschen 2 mit Langlöcher 21 radial auf diametral gegenüberliegende Seite abragen. Durch Ausnehmungen 27, welche in entsprechende Nocken am Gehäuse eingreifen, lässt sich dieser Befestigungsring in vorgegebenen unterschiedlichen Winkellagen durch Schrauben 24 auf der vordern oder hintern Stirnseite des Gehäuses 5 befestigen.

Zur Verbindung von Kunststoffrohren mit den Anschluss-Stutzen kann das Batteriestück auch aus dem Gehäuse 5 herausgezogen werden.

Das Gehäuse kann entweder aus Metall oder Kunststoff hergestellt werden. Die Rohre 8, 9 können entweder aus Metall, insbesondere Kupfer oder Kunststoff bestehen.

Durch Entfernen des Deckels 46 vom Gehäuse 5 liegen somit die Rohre 8, 9 frei, sind von vorne zugänglich und können durch Lösen bzw. Einschrauben der Schraubenmutter 10 mit den Anschluss-Stutzen 11 verbunden bzw. von diesen gelöst werden, ohne dass das Gehäuse 5 ausgebaut werden muss.

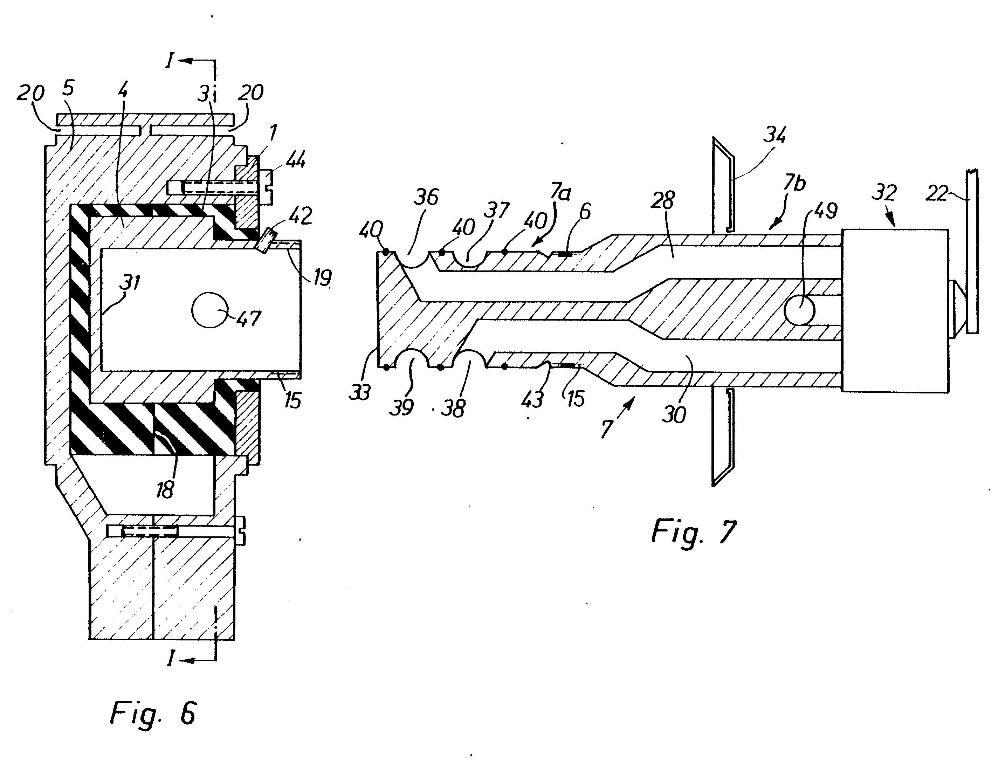

In die Bohrung 19 des Batteriestückes 4 wird eine Auslaufarmatur 7 gemäss Fig. 7 eingesteckt. Diese enthält einen in die Bohrung 19 eingreifenden Steckteil 7a und einen über Putz liegenden zylindrischen Körper 7b, in welchem sich zwei Längskanäle 28, 30 befinden. Im Steckteil 7a befindet sich eine erste Eintrittsöffnung 36 für den Längskanal 28 und eine diametral gegenüberliegende zweite Eintrittsöffnung 38 für den Längskanal 30. Jede dieser beiden Eintrittsöffnungen 36, 38 mündet in eine Ringnut 37, 39 im Steckteil 7a. Diese Eintrittsöffnungen 36, 38 und damit auch die Ringnuten 37, 39 sind in Axialrichtung der Armatur 7 zueinander versetzt. Die Ringnuten 37, 39 stehen in kommunizierender Verbindung mit den Oeffnungen 45, 47 und damit auch mit den Hohlräumen 12, 14. Die Ringnuten 37, 39 sind durch Dichtungsringe 40, insbesondere O-Ringe in der Bohrung 19 gegeneinander abgedichtet, wodurch eine zuverlässige Flüssigkeitstrennung zwischen dem Kalten und dem warmen Wasser sichergestellt ist. Ein weiterer — vorzugsweise flacher — Dichtungsring 6 befindet sich am äussern Ende des Steckteiles 7a. Die lösbare Befestigung der eingesteckten relativ zum Batteriestück 4 drehbaren Armatur 7 erfolgt durch eine oder mehrere am Umfang der Armatur angreifende Arretierschrauben 42, welche schräg in eine Ringnut 43 der Armatur 7 eingreifen. Auf dem aus dem Batteriestück 4 herausragenden, zylindrischen Teil 7b der Armatur 7 ist eine längsverschiebbare Abdeckrosette 34 aufgesteckt, die gegen eine Wand od. dgl. zum Anliegen gebracht werden kann. Das äussere Ende der Armatur 7 ist mit einem Mischventil 32 verbunden, in welcher die Kalt- und Warmwasserströme entsprechend der an einem Hebel 22 oder Handrad einstellbaren Temperatur gemischt werden. Dieses Mischventil 32 ist von an sich bekannter Ausbildung und wird deshalb hier nicht näher erläutert. Das Mischwasser verlässt die Armatur 7 durch eine nach unten gerichtete Auslauföffnung 49, wobei der gleiche Hebel auch zum Oeffnen und Schliessen dienen kann.

Eine Ausführungsvariante besteht darin, dass statt Ringnuten 37, 39 im Steckteil 7a der Armatur 7, solche in Axialrichtung versetzt angeordnete Ringnuten in der Bohrung 19 des Batteriestückes angeordnet werden.

Bei der Verbindung der Rohre 8, 9 mit den Anschluss-Stutzen 11 besteht bei Verwendung von Kunststoff-Rohren eine Schwierigkeit, dass durch das satte Festziehen der Ueberwurfmutter das Rohr unerwünschterweise mitverdreht wird, wodurch sich eine Torsionsbelastung ergibt.

In den Fig. 9, 10 ist ein Anschluss der aus Kunststoff bestehenden Rohrleitungen 8, 9 mit dem betreffenden Anschluss-Stutzen 11 des Batteriestückes 4 dargestellt, bei dem diese Schwierigkeit behoben ist. In die Kunststoff-Rohre 8, 9 wird je eine Einsatzhülse 50 eingeschoben, bis der im Durchmesser grössere Ringkranz 52 an der Rohr-Stirnseite anliegt. Aussen wird auf das Rohrende eine konische, geschlitzte Klemmhülse 54 aufgesetzt, die aussen von einer Ueberwurfmutter 10 umgeben ist. Diese Ueberwurfmutter 10 wird auf das Aussengewinde 60 des Anschluss-Stutzens aufgeschraubt. Zwischen der Stirnfläche des Anschluss-Stutzens 11 und der Schulter des Ringkranzes 52 befindet sich ein Dichtungsring 56, vorzugsweise in Form eines O-Ringes. Um zu vermeiden, dass auf die Rohre 8, 9 eine Torsionsbelastung auftritt beim Festziehen der Ueberwurfmutter 10, hat der in die Oeffnung des Anschluss-Stutzens 11 eingreifende, kurze Ansatz 58 der Einsatzhülse 50 aussen einen nicht kreisrunden Querschnitt, vorzugsweise in Form eines Sechskantes oder Achtkantes. Die Anwendung eines Sechs- oder Achtkantes um das Mitverdrehen des Rohres beim Festziehen der Verschraubung zu vermeiden ist an sich aus der US-A-3 408 099 bekannt.

Das Gegenstück, also die Oeffnung im Anschluss-Stutzen 11, hat eine gegengleiche nichtkreisrunde Querschnittsform. Da die Kunststofrohre 8, 9 etwas flexibel sind, lässt sich die Verschraubung auch nach der starren Befestigung des Gehäuses 5 vornehmen oder bei Reparaturen lassen sich die Rohre 8, 9 leicht auswechseln, ohne dass das Gehäuse 5 ausgebaut werden muss, was bei Unterputzausführung mit grossen Umtrieben verbunden wäre.

In Fig. 11 ist die Rohrverbindung bei Verwendung von metallischen Rohren, insbesondere Kupferrohren 8a, 9a dargestellt. Die Rohrenden werden hier mit einer Metallhülse 61 verlötet. Zwischen der Stirnfläche 64 dieser Metallhülse 61 und der Stirnfläche 62 des Anschluss-Stutzens 11 befindet sich ein Dichtungsring 56, vorzugsweise ein O-Ring. Die Verschraubung erfolgt durch eine auf das Gewinde 60 des Anschluss-Stutzens aufgesetzte Ueberwurfmutter 10, die an einer Schulter der Metallhülse 60 anliegt. Somit lassen sich die gleichen Anschluss-Stutzen 11 sowohl für Kunststoffrohre als auch für Metallrohre verwenden, was die Lagerhaltung vereinfacht.

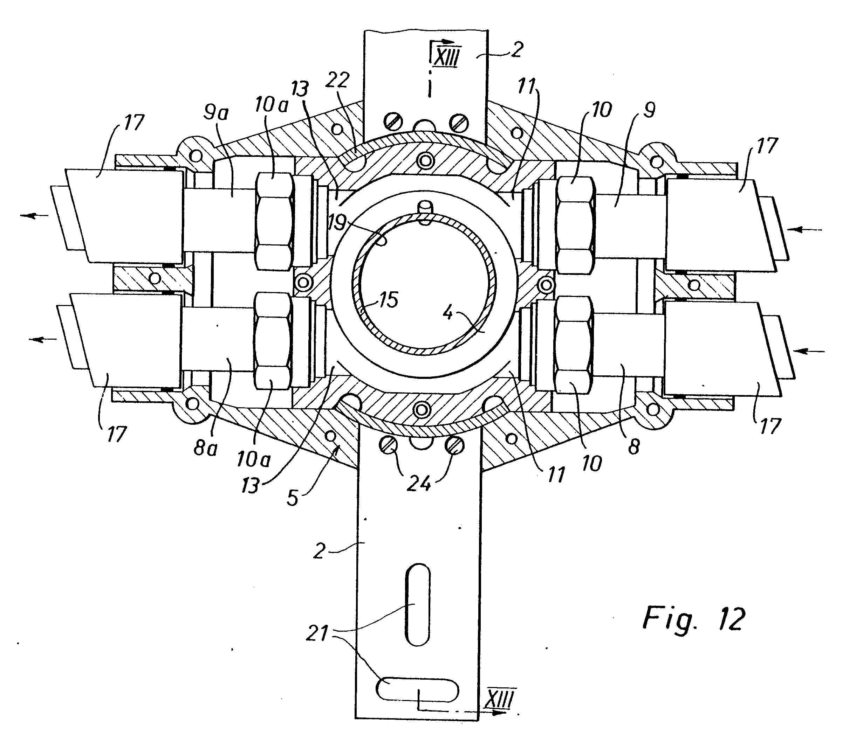

In den Fig. 12, 13 ist eine Ausführungsform dargestellt, die sich gegenüber Fig. 1 dadurch unterscheiden, dass das Batteriestück 4 ausser zwei Eingangsstutzen 11 auch zwei Ausgangsstutzen 13 aufweist, sodass also sowohl das Kaltwasser als auch das Warmwasser getrennt weitergeleitet werden kann, beispielsweise zu einer nächsten Armatur. Damit der getrennte Durchfluss des kalten und warmen Wassers um die Bohrung 19 herum erfolgen kann, sind die Hohlräume 12, 14 im Querschnitt länglich ausgebildet und erstrecken sich je bogenförmig zwischen Eingangs- und Ausgangsstutzen 11, 13. Im übrigen entspricht der Aufbau und die Wirkungsweise derjenigen nach der Ausführungsform gemäss den Fig. 1-8, wobei gleiche Bezugszahlen gleiche Teile bedeuten.

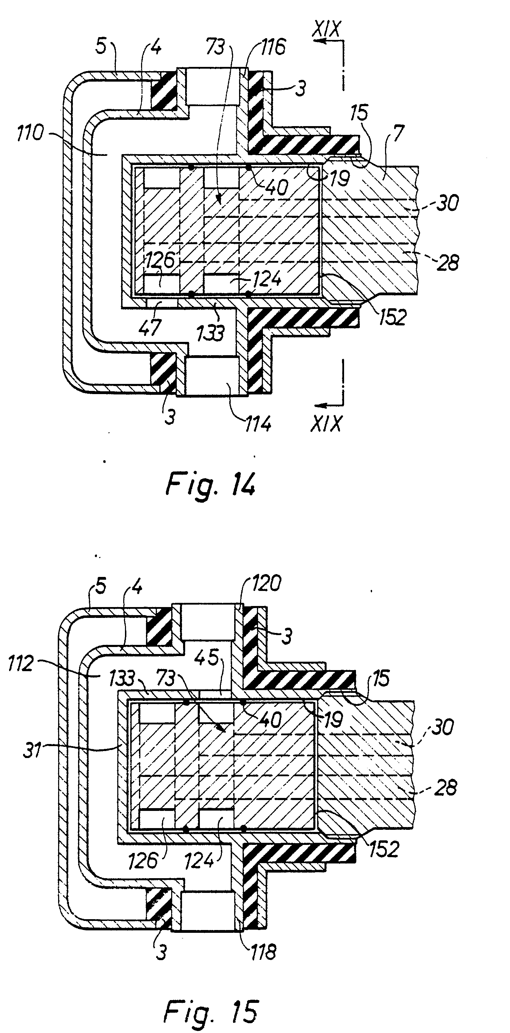

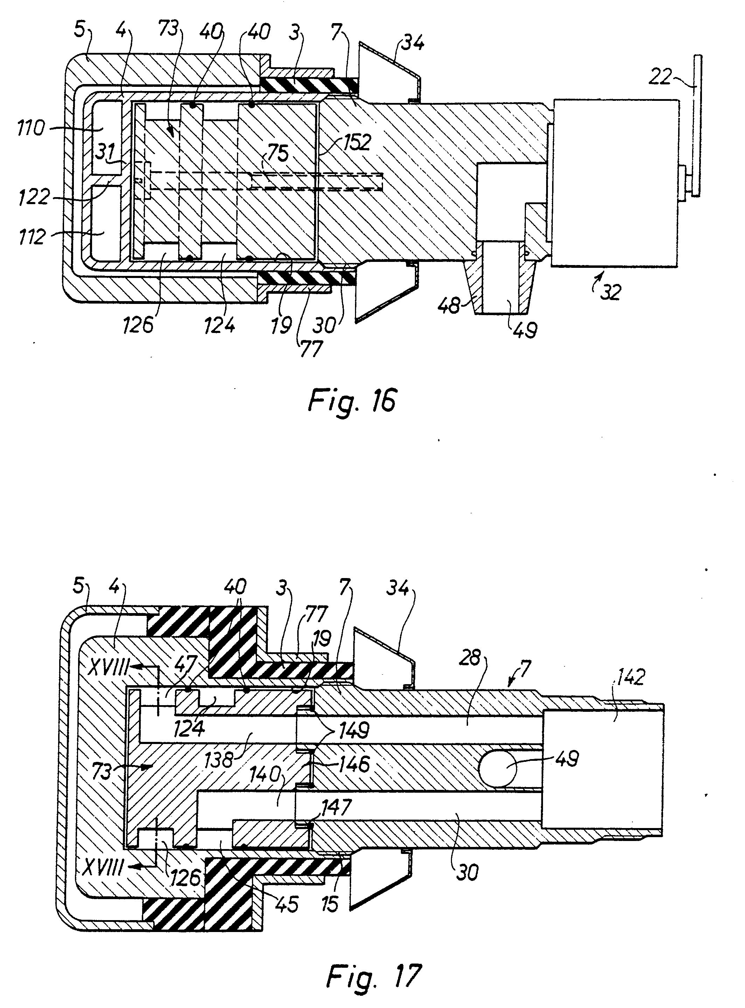

Gemäss den Fig. 14-18 erfolgt der eine Wasseranschluss in ein Batteriestück 4 bei einem Einlassstutzen 114 und führt über einen Kanal 110 zu einem Auslass-Stutzen 116, wie dies aus Fig. 14 hervorgeht. Der andere Wasseranschluss mündet bei einem Einlass-Stutzen 118 ein und führt über einen Kanal 112 zu einem Auslass-Stutzen 120, gemäss Fig. 15. Wie aus Fig. 16 hervorgeht, sind diese beiden Kanäle 110, 112 durch eine Trennwand 22 getrennt und gegenüber der Bohrung 19 durch einen Boden 31 abgeschlossen. Das Gehäuse 5 ist für Unterputzmontage geeignet und dient zur Aufnahme eines Batteriestückes 4. Zwischen dem Gehäuse 5 und dem Batteriestück 4 ist eine Schallschutzeinlage 3 angebracht, beispielsweise aus Weichgummi oder Schaumkunststoff.

Im Innern dieses Batteriestückes 4 ist ein zylindrischer Verteiler 73 angeordnet, welcher sich im zylindrischen Hohlraum 19 des im wesentlichen zylindrischen Batteriestückes 4 befindet und relativ zu diesem verdrehbar ist. Mit einem Gewinde 15 am offenen Ende des Batteriestückes 4 ist die Armatur 7 verschraubt, welche mit einem nicht näher dargestellten, an sich bekannten Mischventil 32 verbunden ist, das in eine zentrale Bohrung 142 eingesetzt wird und durch einen Hebel 22 verstellbar ist. In eine nach abwärts gerichtete Auslassöffnung 49 wird ein Auslaufstutzen 48 eingesetzt. Eine auf der Armatur 7 längsverschiebbare Rosette 34 dient zur Abdeckung der mauerseitigen Oeffnung des über Putz befindlichen Armaturenteiles. Somit befinden sich die beiden Einlass-Stutzen 114 und 118 parallel nebeneinander und die beiden Auslass-Stutzen 116, 120 liegen ebenfalls parallel nebeneinander und befinden sich bezüglich der Bohrung 19 auf diametral gegenüberliegenden Seiten. Die dem Kaltwasser zugeordnete Einlass- und Auslass-Stutzen verlaufen gleichachsig; ebenfalls der Einlass- und der Auslass-Stutzen für Warmwasser. Die Kanäle 110, 112 verlaufen U-förmig um den Boden 31 des Batteriestückes 4 herum.

Im Innern der Armatur 7 befinden sich zwei getrennte Längskanäle 28, 30 für das Kalt- und Warmwasser, welche mit Kanälen 138, 140 des Verteilers 73 in übereinstimmender Durchflussverbindung stehen. Der Kanal 138 des Verteilers 73 mündet in eine Ringnut 126 und der Kanal 140 in eine Ringnut 124 ein. Zwischen den beiden in Axialrichtung voneinander distanzierten Ringnuten 124, 126 befinden sich Dichtungsringe 40, welche eine Abdichtung zwischen der Bohrung 19 des Batteriestückes 4 und den Ringnuten 124, 126 im Verteiler 73 bewirken. Wie aus Fig. 14 hervorgeht, befindet sich im Mantel 133 des Batteriestückes 4 eine erste Einlassöffnung 47. Eine zweite Einlassöffnung 45 befindet sich gemäss Fig. 15 im Mantel 133 auf der diametral gegenüberliegenden Seite des Batteriestückes 4. Die beiden Einlassöffnungen 45 und 47 sind in Axialrichtung zueinander versetzt angeordnet. Der Verteiler 73 kann somit relativ zum Batteriestück 4 und damit auch zum Gehäuse 5 eine beliebige Drehlage einnehmen. In jeder Drehlage der Armatur 7 bestehen getrennte Durchflussverbindungen zwischen dem Kanal 110 und Ringnut 126 einerseits und zwischen dem Kanal 112 und Ringnut 124 andererseits, da die Einlassöffnungen 45, 47 sowohl in Umfangsrichtung als auch in Axialrichtung zueinander versetzt angeordnet sind.

Wie aus Fig. 17 hervorgeht, ist an der Trennstelle 152 zwischen dem Verteiler 73 und der Armatur 7 mindestens ein zylindrischer Ansatz oder Zapfen 146 vorhanden; im Gegenstück sind entsprechende zylindrische Nuten 147 angebracht. An der Trennstelle befinden sich Dichtungsringe 149. Zwischen dem Verteiler 73 und der Armatur 7 sind somit Drehsicherungsmittel in einer solchen Form vorhanden, dass der Zusammenbau zwischen Armatur 7 und Verteiler 73 nur in zwei vorbestimmten, zueinander um 180° verdrehten Lage möglich ist. Es ist zweckmässig, die Armatur 7 mit dem Verteiler 73 durch eine zentrale Schraube 75 zusammenzuziehen und somit starr zu verbinden.

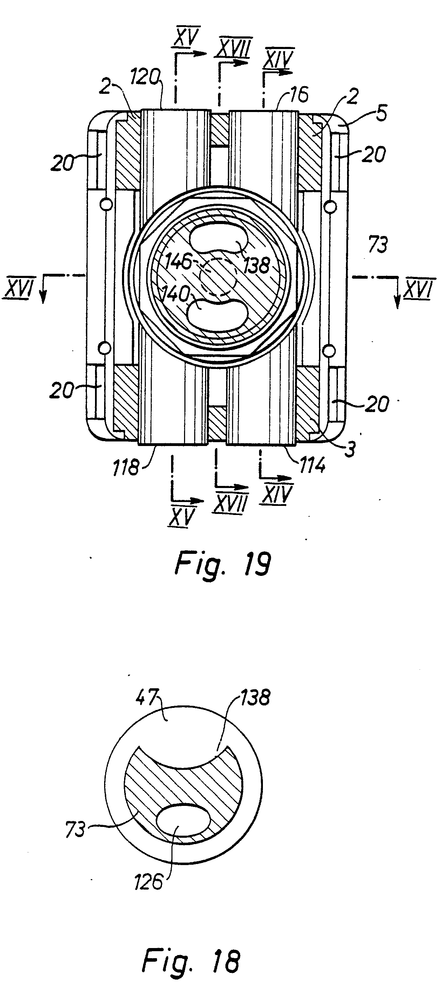

Aus Fig. 18 ist ersichtlich, dass der Verteiler 73 mit einer sichelartigen Durchflussöffnung 138 versehen ist, während die Ringnut 126 eine ovale Form hat.

An die Auslass-Stutzen 116 und 120 können direkt Rohrleitungen für eine nächste Armatur angeschlossen werden, ohne dass ein Kreuzen der Leitungen erforderlich ist. Dies wird dadurch erreicht, dass der Verteiler 73 in der Bohrung 19 drehbar ist und wahlweise relativ zur Armatur 7 auch eine um eine halbe Umdrehung verdrehte Lage einnehmen kann. Dadurch ist es gleichgültig, ob bei der nächsten Armatur die Warmwasserzuleitung auf der linken oder rechten Seite zuzuführen ist. Zudem lässt sich die Auslauföffnung 49 unabhängig von der Winkellage des Gehäuses 5 stets senkrecht nach unten richten. Ausserdem befindet sich die Warmwasserzufuhr stets auf der linken und das Kaltwasser stets auf der rechten Seite, wie dies durch Installations-Normen vorgeschrieben und durch den Aufbau des Mischventiles 32 gegeben ist.

Dies hat zur Folge, dass es bei der Installation und bei der Leitungsführung keine Rolle spielt, ob die Kalt- oder Warmwasserleitung auf der linken oder rechten Seite der Anschlussvorrichtung zugeführt wird, da durch eine Verdrehung des Verteilers 73 um 180° das zum Mischventil 32 führende Kalt- und Warmwasser stets auf der richtigen Seite zu liegen kommt. Ausserdem können die Rohrleitungen in einer beliebigen Winkellage in der Mauerebene den Anschlussorganen zugeführt werden, im Gegensatz zu konventionellen Armaturen.

Das Gehäuse 5, welches aus Kunststoff oder Metall bestehen kann, ist von seiner vordern Seite her zugänglich. Nach dem Einbau wird das Batteriestück 4 samt Schallschutzeinlage 3 mit einem Abschlussdeckel 77 im Gehäuse 5 festgeschraubt.

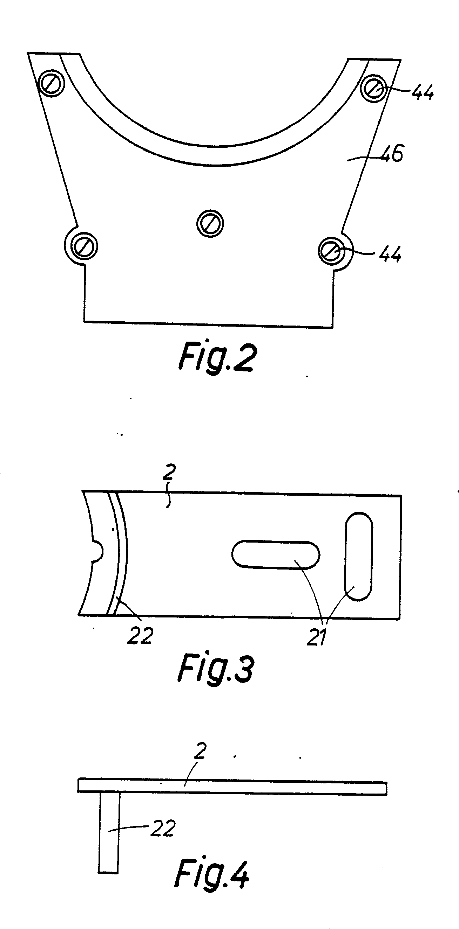

Gemäss Fig. 19 sind im Gehäuse 5 ferner Schlitze 20 vorhanden, welche der Aufnahme von winkelförmigen Befestigungsbügeln 2 gemäss den Fig. 3, 4 dienen. Diese Schlitze 20 sind entweder durchgehend oder an gegenüberliegenden Gehäuseseiten angeordnet, sodass diese Befestigungsbügel 2 wahlweise an der Vorder- oder Rückseite des Gehäuses 5 eingesetzt werden können. Statt vier solcher Befestigungsbügel 2 kann auch nur eine geringere Zahl derselben verwendet werden.

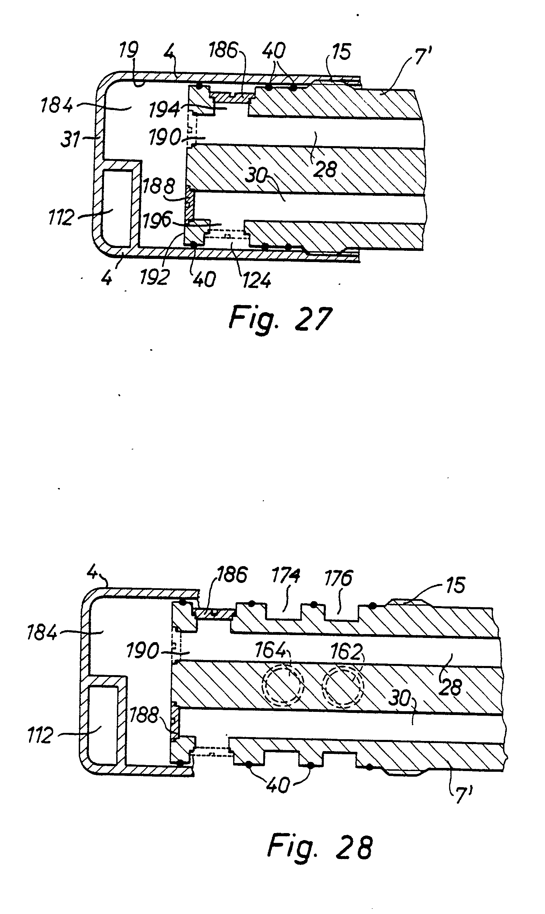

In Fig. 27 ist eine Ausführungsvariante dargestellt. Bei dieser ist der Verteiler und die Armatur 7' einstückig ausgeführt und durch das Gewinde 15 im Hohlraum 19 des Batteriestückes 4 festgehalten. Der eine Längskanal 28 ist über seine stirnseitig offene Mündung 190 mit einer Kammer 184 durchflussverbunden. Diese Kammer 184 ist auf der einen Seitem durch die Stirnfläche der Armatur 7' und auf der andern Seite durch den Boden 31 begrenzt. Der gegenüber der Kammer 184 geschlossene Kanal 112 steht über die Querbohrung 196 und Ringnut 124 in Durchflussverbindung. Diese Armatur 7' ist gegenüber dem Hohlraum 19 durch Dichtungsringe 40 abgedichtet. Eine vom Längskanal 28 seitlich abragende Querbohrung 194 ist durch einen Gewindepfropfen 186 verschlossen. Der zweite parallele Längskanal 30 ist stirnseitig durch einen Gewindepfropfen 118 verschlossen, hingegen ist seine Querbohrung 196 offen und mündet — wie bei den Ausführungsbeispielen nach den Fig. 14-18 — über die Ringnut 124 in den Kanal 112 ein. Wenn nun die armaturseitigen Kalt- und Warmwasser-Ausgänge vertauscht werden sollen, wird der Gewindepfropfen 186 aus der Querbohrung 194 entfernt und statt dessen — wie mit unterbrochenen Linien angedeutet ist — stirnseitig in die Querbohrung 28 eingeschraubt, sodass diese dicht verschlossen wird. Ausserdem wird der Gewindepfropfen 188 aus dem Längskanal 30 entfernt und statt dessen in die Querbohrung 196 eingeschraubt. Dadurch werden die zur Mischbatterie führenden Kalt- und Warmwasserkanäle vertauscht. Das gleiche kann erreicht werden durch Verwendung von zwei verschiedenen Verteiler-Armaturen 7', die wahlweise in den Hohlraum 19 einsetzbar sind, bei denen die geöffneten und geschlossenen Kanäle bzw. Querbohrungen vertauscht sind.

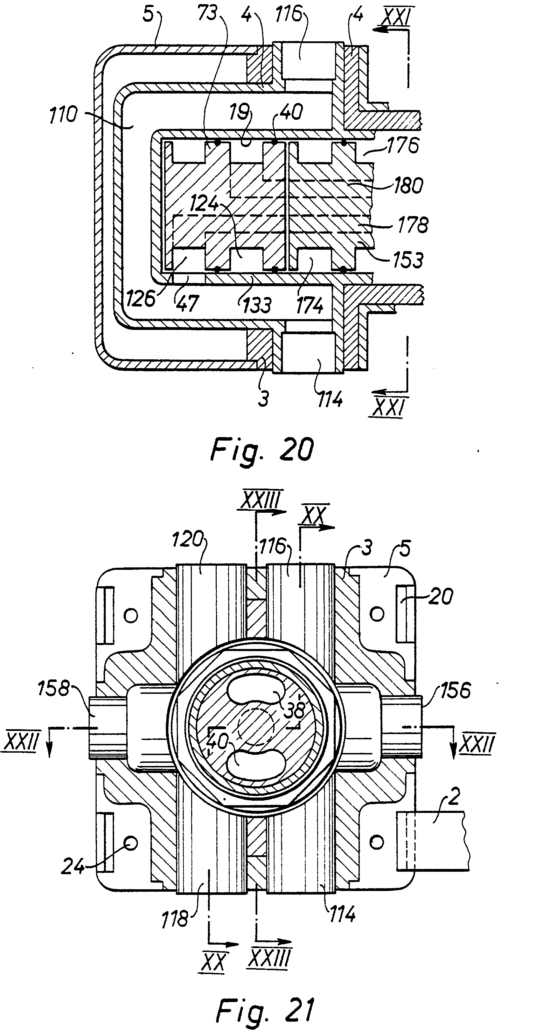

In den Fig. 20-25 ist eine Ausführungsvariante dargestellt, die zusätzlich zwei das Mischwasser abführende Rohrstutzen 156, 158 aufweist, von denen der eine beispielsweise zu einer Kopfdusche und der andere zu einer Fussdusche führen können. Die gleichen Bezugszahlen bedeuten auch hier gleiche Teile und gleiche Funktionen. Bei der Ausführungsform gemäss den Fig. 20-25 ist ein zweiter Abfluss-Verteiler 153 vorhanden, der zwischen dem ersten Verteiler 73 und der Armatur 7 eingesetzt ist. Der getrennte Zufluss von Warm- und Kaltwasser zur Mischbatterie erfolgt gemäss den Fig. 20, 21 und 23 durch die Einlass-Stutzen 114 und 118. Das dem Einlass-Stutzen 114 zufliessende Wasser gelangt über die Einlassöffnung 47 in die Ringnut 126 und von dort über den Abflussverteiler 153 und dessen Längsbohrung 178 in den Längskanal der Armatur 7. Zudem besteht eine Durchflussverbindung über den Kanal 110 zum Auslass-Stutzen 116. Das dem andern Einlass-Stutzen 118 zufliessende Wasser fliesst analog zu Fig. 15 über den Kanal 112 und die Oeffnung 45 in die Ringnut 124 des Verteilers 73 und von dort in die Längsbohrung 180 des Abfluss-Verteilers 152 und von dort in den Längskanal 30 der Armatur 7. Zudem besteht eine Durchflussverbindung zum Auslass-Stutzen 120. Die miteinander in Durchflussverbindung stehenden Kanäle in der Armatur 7, im Abfluss-Verteiler 153 und im Verteiler 73 sind zueinander koaxial angeordnet.

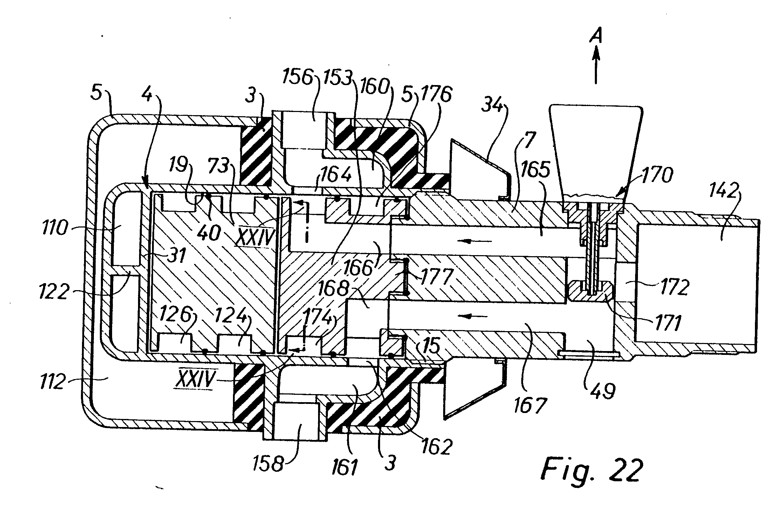

Das vom Mischventil 32 (Fig. 16) abgehende Mischwasser gelangt in der Gegenrichtung zum Kalt- und Warmwasser über eine zentrale Oeffnung 172 zu einem konventionellen Umstellventil 170. In der in Fig. 22 dargestellten Lage dieses Umstellventiles 170 strömt das Mischwasser von der Oeffnung 172 in der Armatur 7 in die Längsbohrung 165 und den Kanal 166 des Abfluss-Verteilers 153. Von dort gelangt es über einen Durchbruch 164 der Wandung des Batteriestückes 4 in eine Kammer 160 und von hier zu einem Anschluss-Stutzen 156, der über eine Leitung beispielsweise mit einer Kopfdusche verbunden werden kann.

Wenn dagegen das Umstellventil 170 in Richtung des Pfeiles A bewegt wird, schliesst der Ventilkörper 171 die Längsbohrung 165, sodass hernach das Mischwasser in den Längskanal 167 der Armatur 7, den Kanal 168 des Abfluss-Verteilers 153 und den Durchbruch 162 in der Wand des Batteristückes 4 in die Kammer 161 und von hier in einen Anschluss-Stutzen 158, beispielsweise zu einer Fussdusche strömt. Die beiden Ringnuten 174, 176, in welche die Kanäle 166, 168 des Abfluss-Verteilers 153 einmünden, sind in Axialrichtung zueinander versetzt angeordnet und die Durchbrüche 162 und 164 sind am Umfang versetzt und liegen vorzugsweise diametral gegenüber.

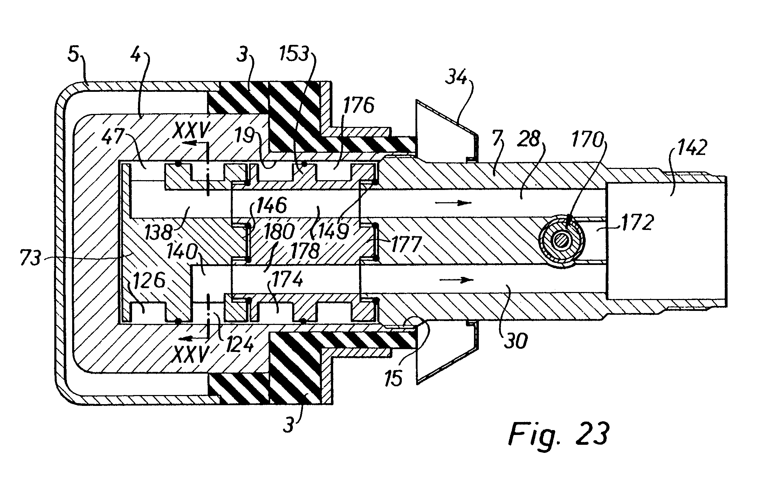

Wie aus Fig. 23 hervorgeht, besteht zwischen dem Verteiler 73 und dem Abfluss-Verteiler 153 eine axial trennbare Verbindung mit Zapfen 146 und Nut im Gegenstück. Die Ausbildung ist so getroffen, dass eine Zusammenfügung dieser beiden Teile nur in zwei um 180° verdrehten Positionen möglich ist. Zwischen Abfluss-Verteiler 153 und Armatur 7 ist ebenfalls eine gleiche oder ähnliche axial trennbare Verbindung mit Zapfen 177 und Nut vorhanden, die ebenfalls nur in zwei sich um 180° unterscheidenden Positionen zusammenpassen. Der Verteiler 73 und der Abfluss-Verteiler 153 können mit der Armatur 7 durch eine zentrale Schraube 75 miteinander starr verbunden werden, wie dies in Fig. 16 eingezeichnet ist.

Mit dem Abfluss-Verteiler 153 wird erreicht, dass der Warm- und Kaltwasseranschluss vertauscht werden kann, wie dies im Zusammenhang mit den Fig. 14-17 erläutert wurde und zusätzlich noch die Möglichkeit besteht, das Mischwasser bei eingedrücktem Umstellventil 170 — gemäss Fig. 22 — durch Verdrehung des Abfluss-Verteilers 153 um 180° wahlweise dem Fussduschenauslass 158 oder dem Kopfduschenauslass 156 zuführen zu können.

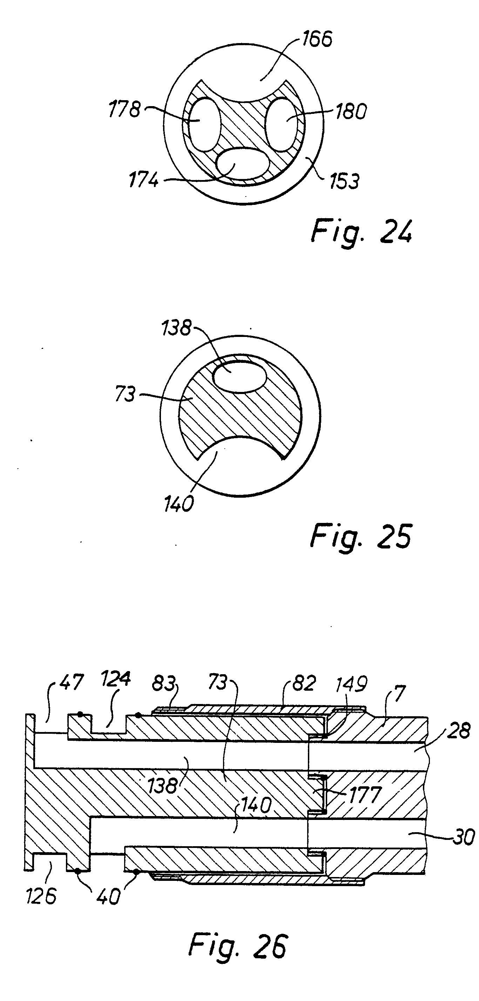

In Fig. 26 ist eine Ausführungsvariante dargestellt, bei welcher auf den Abfluss-Verteiler 153 verzichtet wird, jedoch unter Beibehaltung der gleichen Abmessungen des Batteriestückes 4 des Gehäuses und der Armatur 7 die gleichen Funktionen möglich sind, wie im Zusammenhang mit den Fig. 14-17. Eine die starre Verbindung bewirkende Hülse 82 ist am einen Ende mit einem in das Gewinde 15 des Batteriestückes 4 eingreifenden Aussengewinde und am andern Ende mit einem in die Armatur 7 eingreifenden Innengewinde versehen.

Fig. 28 zeigt eine Ausführungsvariante, welche mit derjenigen gemäss Fig. 27 vergleichbar ist, die jedoch ebenfalls zum Anschluss einer Kopf-und Fussdusche geeignet ist. Der Verteiler und die Armatur 7 bestehen hier wiederum aus einem einzigen Stück, das in der Bohrung des Batteriestückes 4 drehbar gehalten ist. Die Funktionsweise entspricht derjenigen gemäss Fig. 19, kombiniert mit derjenigen gemäss Fig. 20-25, wobei gleiche Bezugszahlen gleiche Teile bedeuten.

Auch bei der Ausführungsform nach den Fig. 1 — 8 kann die Armatur so ausgebildet werden, dass der eine Längskanal 28 an der hintern Stirnseite — also statt in die Ringnut 29 — einmündet. Den Steckteil 7a kann man sich somit derart vorstellen, wie wenn er im Bereich zwischen den Nuten 37 und 39 abgeschnitten wäre. Das zugehörige Batteriestück 4 ist — ähnlich wie bei den Fig. 27 und 28 — mit einer stirnseitig angeordneten Kammer — entsprechend der Kammer 184 — versehen. Es wird dadurch nur noch die eine Ringnut 38 benötigt. In ähnlicher Weise kann auch der Verteiler 73 ausgebildet werden, indem der Längskanal 138 (Fig. 17) statt in die Ringnut 126 in eine stirnseitige Kammer des Batteriestückes 4 einmündet.

Die Anschluss-Stutzen 114, 116, 118, 120, 156, 158 können entweder als Lötanschlüsse für Kupferleitungen, als Gewindeanschlüsse für galvanische Stahlrohre oder als Klemmverschraubungen für Kunststoff-Rohre ausgebildet werden, wie dies im Zusammenhang mit den Fig. 9-11 beschrieben wurde.

**Patentansprüche**

1. Sanitär-Armaturanschlussorgan mit Armatur, mit Stutzen (8, 9) für Kalt- und Warmwasseranschluss, mit einem Gehäuse (5) und einem in diesem gehaltenen Batteriestück (4) zur Aufnahme der Armatur (7), insbesondere einer Mischbatterie-Armatur, mit getrennten Kalt- und Warmwasserkanälen (28, 30) im Batteriestück (4) und in der Armatur, dadurch gekennzeichnet, dass die Armatur (7) drehbar in eine Bohrung (19) des Batteriestückes (4) eingreift, dass Kalt- und Warmwasser in der Armatur (7) getrennt über je eine Eintritts-Oeffnung (36, 38) mit Hohlräumen (12, 14) des Batteriestückes (4) in Durchflussverbindung stehen, und je ein Hohlraum mit der Kalt- bzw. Warmwasserzufuhr in Verbindung steht, wobei die gegeneinander abgedichteten Eintritts-Oeffnungen (36, 38) in Axialrichtung — bezogen auf die Bohrungslängsachse des Batteriestückes (4) — zueinander versetzt angeordnet sind und die Eintritts-Oeffnungen (36, 38) in die untereinander getrennten Längskanäle (28, 30) der Armatur in beliebiger Drehlage mit den untereinander getrennten Hohlräumen (12, 14) des Batteriestückes in Verbindung bleiben.

2. Sanitär-Armaturanschlussorgan nach Anspruch 1, dadurch gekennzeichnet, dass die Armatur (7) einen in das Batteriestück (4) einsteckbaren und in der Einstecklage fixierbaren zylindrischen Teil (7a) enthält, und in diesem zylindrischen Teil (7a) der Armatur (7) axial versetzt angeordnete Dichtungsringe (40) vorhanden sind, welche Kalt- und Warmwasser trennen.

3. Sanitär-Armaturanschlussorgan nach Anspruch 1 oder 2, dadurch gekennzeichnet, dass das Gehäuse (5) eine armaturseitige offene Bohrung (13) aufweist, in der sich das Batteriestück (4) befindet, Anschluss-Stutzen (8, 9) für das Warm- und Kaltwasser parallel nebeneinander in der gleichen Ebene liegen und mit dem Batteriestück (4) ein einziges Stück bilden.

4. Sanitär-Armaturanschlussorgan nach Anspruch 3, dadurch gekennzeichnet, dass das Batteriestück (4) in der Gehäusebohrung (13) in zwei von der Gehäuse-Stirnseite her einsetzbare Schallschutzschalen (3) gelagert ist, und auf der stirnseitigen Gehäuseöffnung ein gegen die Schallschutzschalen (3) anliegender Druckring (1) vorhanden ist.

5. Sanitär-Armaturanschlussorgan ·nach Anspruch 4, dadurch gekennzeichnet, dass das Gehäuse (5) ein Unterputzgehäuse ist, das mindestens von der einen Gehäuse-Stirnseite her zugängliche Aufnahmeorgane (20) für Befestigungslaschen (2) aufweist, mit denen das Gehäuse in unterschiedlichen Winkellagen an einer Wand fixiert ist.

6. Sanitär-Armaturanschlussorgan nach einem der Ansprüche 1-5, dadurch gekennzeichnet, dass das Batteriestück (4) auf der den Kalt- und Warmwasser-Einlauf-Stutzen (8, 9) gegenüberliegenden Seite je einen Kalt- und Warmwasser-Auslaufstutzen (8a, 9a) aufweist, wobei die Mittelachsen aller Stutzen (8, 8a, 9, 9a) in einer gemeinsamen Ebene liegen, die quer zur Längsachse der Armatur (7) verläuft (Fig. 12).

7. Sanitär-Armaturanschlussorgan nach einem der Ansprüche 1-6, dadurch gekennzeichnet, dass die beiden Hohlräume (12, 14) im Batteriestück (4) auf diametral gegenüberliegenden Seiten um ihre Bohrung (19) herum angeordnet sind und die Oeffnungen (36, 38) in der Armatur (7) nach diametral gegenüberliegenden Seiten ausmünden.

8. Sanitär-Armaturanschlussorgan nach einem der Ansprüche 1-7, dadurch gekennzeichnet, dass entweder im Batteriestück (4) oder in dem in dieses eingreifenden Armaturteil (7a) mindestens eine Ringnut (37, 39) vorhanden ist, in die die eine Eintritts-Oeffnung (36, 38) der Armatur (7) ausmündet.

9. Sanitär-Armaturanschlussorgan nach einem der Ansprüche 1-8, dadurch gekennzeichnet, dass die Stutzen (11, 13) im Gehäuse (5) von einem von vorne zugänglichen lösbaren Deckel (46) überdeckt sind.

10. Sanitär-Armaturanschlussorgan nach einem der Ansprüche 1-4, 6-9, dadurch gekennzeichnet, dass zur Fixierung des Gehäuses (5) an einer Wand ein Befestigungsring (41) vorhanden ist, von dem mindestens eine, vorzugsweise zwei sich diametral gegenüberliegende Laschen (2) abragen, wobei der Befestigungsring durch von der einen Gehäusestirnseite her zugängliche Schrauben (24) in vorbestimmten, unterschiedlichen Winkellagen relativ zur einen Gehäusestirnseite befestigbar ist.

11. Sanitär-Armaturanschlussorgan, insbesondere nach einem der Ansprüche 1-10, dadurch gekennzeichnet, dass mindestens der Mündungsbereich der Stutzen 11, 13) eine nicht-kreisrunde, insbesondere Sechskant-Form hat, eine in die als flexibles Kunststoffrohr (16) ausgebildete Wasserzu- oder Ableitung (8, 9) eingesetzte Hülse (50) eine gegengleiche nicht-kreisrunde Form hat, zwischen der Stirnfläche des Stutzens (11, 13) und einem Ringkranz (52) der Hülse (50) ein Dichtungsring (56) eingelegt ist und die beiden Teile (8, 9 ; 11, 13) durch eine Ueberwurfmutter (10) zusammengezogen sind (Fig. 9).

12. Sanitär-Armaturanschlussorgan nach einem der Ansprüche 1-11, dadurch gekennzeichnet, dass die Armatur (7) einen als Verteiler (73) ausgebildeten Teil aufweist, der in das Batteriestück (4) eingreift, wobei die Eintrittsöffnungen (45, 47) in Längsbohrungen (138, 140) dieses Verteilers (73) einmünden.

13. Sanitär-Armaturanschlussorgan nach Anspruch 12, dadurch gekennzeichnet, dass der Verteiler (73) als getrennter Teil ausgebildet und mit der Armatur (7) zwei um 180° verdrehte Positionen einnehmen kann, wobei in beiden Positionen die Längsbohrungen (138, 140) des Verteilers (73) mit den Längskanälen (28, 30) der Armatur (7) fluchten (Fig. 17).

14. Sanitär-Armaturanschlussorgan nach Anspruch 12 oder 13, dadurch gekennzeichnet, dass die zwischen den Einlass- und Auslass-Stutzen (114, 188 ; 116, 120) befindlichen Kalt- und Warmwasserkanäle (110, 112) in voneinander paralleler, U-förmiger Gestalt um den Boden (32) des Batteriestückes (4) herumgeführt sind, ferner die Einlass- und Auslass-Stutzen (114, 118 ; 116, 120) zueinander gleichachsig und quer zur Längsachse der Armatur (7) verlaufen (Fig. 14, 15, 19).

15. Sanitär-Armaturanschlussorgan nach einem der Ansprüche 12-14, dadurch gekennzeichnet, dass der Verteiler aus zwei zueinander um 180° verdrehbaren Teilstücken (73, 153) besteht, wobei das eine Verteiler-Teilstück (153) mit zwei Mischwasser-Kanälen (165, 167) der Armatur (7) in Durchflussverbindung steht, die gegenüber den Längskanälen (28, 30) für das Kalt- und Warmwasser getrennt geführt und in Gegenrichtung durchströmt sind, dass in beiden Teilstücken (73, 153) des Verteilers in Axialrichtung voneinander getrennte Ringnuten (124, 126 ; 174, 176) vorhanden sind, von welchen diejenigen des einen Teilstückes mit den Einlassöffnungen (45, 47) für Kalt- und Warmwasser und diejenigen des andern Teilstückes (153) mit Auslassöffnungen (162, 164) für Mischwasser in Durchflussverbindung stehen (Fig. 20-23).

16. Sanitär-Armaturanschlussorgan nach Anspruch 12, dadurch gekennzeichnet, dass die Armatur (7) und der oder die Verteiler (73, 153) einstückig ausgebildet sind, beide Längskanäle (28, 30) in eine stirnseitige Kammer (184) des Batteriestückes (4) ausmünden und wahlweise der eine oder andere Längskanal (28, 30) durch einen Gewindepfropfen (188) verschliessbar ist und im jeweils andern Längskanal die eine oder andere in die Ringnut (124) einmündende Durchflussöffnung durch einen weiteren Gewindepfropfen (186) verschliessbar ist (Fig. 27, 28).

**Claims**

1. Connecting device for sanitary installations, with a fitting, with branches (8, 9) for cold-water and hot-water connections, with a housing (5), and with a battery piece (4) retained in the latter and intended for receiving the fitting (7), especially a mixer-tap fitting, with separate cold-water and hot-water channels (28, 30) in the battery piece (4) and in the fitting, characterized in that the fitting (7) engages rotatably into a bore (19) in the battery piece (4), in that cold water and hot water are each connected separately in the fitting (7) for through-flow purposes in the fitting (7) to cavities (12, 14) in the battery piece (4) via an inflow orifice (36, 38), and one cavity is connected to the cold-water supply and one to the hot-water supply, the inflow orifices (36, 38), sealed off from one another, being arranged offset relative to one another in the axial direction in relation to the longitudinal axis of the bore in the battery piece (4), and the inflow orifices (36, 38) into the mutually separate longitudinal channels (28, 30) of the fitting remaining in communication, in any rotary position, with the mutually separate cavities (12, 14) of the battery piece.

2. Connecting device for sanitary installations according to Claim 1, characterized in that the fitting (7) contains a cylindrical part (7a) which can be inserted into the battery piece (4) and fixed in the insertion position, and in this cylindrical part (7a) of the fitting (7) there are axially offset sealing rings (40) which separate the cold water and hot water.

3. Connecting device for sanitary installations according to Claim 1 or 2, characterized in that the housing (5) has a bore (13) which is open towards the fitting and in which the battery piece (4) is located, and connecting branches (8, 9) for the hot water and cold water are arranged parallel and next to one another in the same plane and integrally with the battery piece (4).

4. Connecting device for sanitary installations according to Claim 3, characterized in that the battery piece (4) is mounted in the housing bore (13) in two sound-proofing shells (3) insertable from the end face of the housing, and a thrust ring (1) resting against the sound-proofing shells (3) is arranged on the end-face housing orifice.

5. Connecting device for sanitary installations according to Claim 4, characterized in that the housing (5) is a flush-mounted housing which has receiving members (20) accessible at least from one housing end-face and intended for mounting plates (2), by means of which the housing is fixed to a wall in different angular positions.

6. Connecting device for sanitary installations according to one of Claims 1 to 5, characterized in that the battery piece (4) has, on each of the sides located respectively opposite the cold-water and hot-water inflow branches (8, 9), a cold-water and hot-water outflow branch (8a, 9a) the centre axes of all the branches (8, 8a, 9, 9a) lying in a common plane extending transversely relative to the longitudinal axis of the fitting (7) (Figure 12).

7. Connecting device for sanitary installations according to one of Claims 1 to 6, characterized in that the two cavities (12, 14) in the battery piece (4) are arranged round its bore (19) on diametrically opposite sides, and the orifices (36, 38) in the fitting (7) open out on diametrically opposite sides.

8. Connecting device for sanitary installations according to one of Claims 1 to 7, characterized in that there is either in the battery piece (4) or in the fitting part (7a) engaging into the latter at least one ring groove (37, 39), into which opens one inflow orifice (36, 38) of the fitting (7).

9. Connecting device for sanitary installations according to one of Claims 1 to 8, characterized in that the branches (11, 13) in the housing (5) are covered by a releaseable cover (46) accessible from the front.

10. Connecting device for sanitary installations according to one of Claims 1 to 4 and 6 to 9, characterized in that, to fix the housing (5) to a wall, there is a mounting ring (41), from which at least one, but preferably two diametrically opposite plates (2) project, and the mounting ring can be fastened in predetermined different angular positions relative to one housing end-face by means of screws (24) accessible from one housing end-face.

11. Connecting device for sanitary installations, especially according to one of Claims 1 to 10, characterized in that at least the outlet region of the branches (11, 13) has a non-circular, especially hexagonal shape, a sleeve (50) inserted into the water inflow or flow-off line (8, 9) designed as a flexible plastic pipe (16) has a complementary non-circular shape, a sealing ring (56) is inserted between the end face of the branch (11, 13) and an annular rim (52) of the sleeve (50), and the two parts (8, 9 ; 11, 13) are drawn together by means of a coupling nut (10) (Figure 9).

12. Connecting device for sanitary installations according to one of Claims 1 to 11, characterized in that the fitting (7) has a part which is designed as a distributor (73) and which engages into the battery piece (4), the inflow orifices (45, 47) opening into longitudinal bores (138, 140) in this distributor (73).

13. Connecting device for sanitary installations according to Claim 12, characterized in that the distributor (73) is designed as a separate part and, together with the fitting (7), can assume two positions rotated through 180º, in both positions the longitudinal bores (138, 140) of the distributor (73) being aligned with the longitudinal channels (28, 30) of the fitting (7) (Figure 17).

14. Connecting device for sanitary installations according to Claim 12 or 13, characterized in that the cold-water and hot-water channels (110, 112) located between the inlet and outlet branches (114, 188 ; 116, 120) are guided round the bottom (32) of the battery piece (4) in U-shaped form parallel to one another, and furthermore the inlet and outlet branches (114, 118 ; 116, 120) extend coaxially relative to one another and transversely in relation to the longitudinal axis of the fitting (7) (Figures 14, 15, 19).

15. Connecting device for sanitary installations according to one of Claims 12 to 14, characterized in that the distributor consists of two portions (73, 153) rotatable 180º relative to one another, one distributor portion (153) being connected for through-flow purposes to two water-mixer channels (165, 167) of the fitting (7), which are guided so as to be separated from the longitudinal channels (28, 30) for the cold water and hot water and through which the flow passes in the opposite direction, and in that in the two portions (73, 153) of the distributor there are ring grooves (124, 126 ; 174, 176) which are separated from one another in the axial direction and of which those of one portion are connected for through-flow purposes to the inlet orifices (45, 47) for cold water and hot water and those of the other portion (153) are connected for through-flow purposes to outlet orifices (162, 164) for mixing water (Figures 20 to 23).

16. Connecting devices for sanitary installations according to Claim 12, characterized in that the. fitting (7) and the distributor or distributors (73, 153) are made in one piece, the two longitudinal channels (28, 30) open out into a chamber (184) on the end-face of the battery piece (4), one or other of the longitudinal channels (28, 30) can be closed selectively by means of a threaded plug (188), and in the other particular longitudinal channel one or other of the through-flow orifices opening into the ring groove (124) can be closed by means of a further threaded plug (186) (Figures 27 and 28).

**Revendications**

1. Organe de raccord de robinetterie sanitaire avec une robinetterie, avec des tuyaux (8, 9) pour le raccord d'eau froide et chaude, avec un corps (5) et une pièce de batterie (4) contenue dans celui-ci pour recevoir l'armature ou robinetterie (7), en particulier une robinetterie de mitigeur, avec des canaux d'eau froide et chaude distincts (28, 30) dans la pièce de batterie (4) et dans la robinetterie, caractérisé en ce que l'armature (7) s'engage à rotation dans un alésage (19) de la pièce de batterie (4), que l'eau froide et l'eau chaude se trouvent en liaison de circulation dans l'armature (7), par l'intermédiaire d'une ouverture d'entrée (36, 38), avec des espaces libres (12, 14) de la pièce de batterie (4), et chaque espace libre se trouve en liaison avec l'arrivée d'eau froide ou chaude, les ouvertures d'entrée (36, 38) rendues étanches l'une par rapport à l'autre, étant disposées décalées mutuellement dans le sens axial — par rapport à l'axe longitudinal de l'alésage de la pièce de batterie (4) — et les ouvertures d'entrée (36, 38) dans les canaux longitudinaux séparés l'un de l'autre (28, 30) de l'armature restent en liaison dans n'importe quelle position en rotation avec les espaces libres séparés l'un de l'autre (12, 14) de la pièce de batterie.

2. Organe de raccord de robinetterie sanitaire suivant la revendication 1, caractérisé en ce que la robinetterie ou armature (7) comporte une partie cylindrique (7a) pouvant être introduite dans la pièce de batterie (4) et pouvant être immobilisée dans la position d'introduction, et dans cette partie cylindrique (7a) de l'armature (7) existent des bagues d'étanchéité (40) disposées avec un décalage axial, qui séparent l'eau froide et chaude.

3. Organe de raccord de robinetterie sanitaire suivant la revendication 1 ou 2, caractérisé en ce que le corps (5) présente un alésage (13) ouvert côté armature, dans lequel se trouve la pièce de batterie (4), des tuyaux de raccord (8, 9) pour l'eau chaude et froide se situent parallèlement côte à côte dans le même plan et forment une seule pièce avec la pièce de batterie (4).

4. Organe de raccord de robinetterie sanitaire suivant la revendication 3, caractérisé en ce que la pièce de batterie (4) est supportée dans l'alésage de corps (13) dans deux coquilles antibruit pouvant être mises en place à partir de la face frontale du corps, et sur l'ouverture de corps côté frontal existe une bague de pression (1) s'appliquant contre les coquilles anti-bruit (3).

5. Organe de raccord de robinetterie sanitaire suivant la revendication 4, caractérisé en ce que le corps (5) est un corps encastré, qui présente des organes de réception (20) accessibles à partir d'au moins une face frontale du corps, pour des attaches de fixation (2), avec lesquelles le corps est immobilisé en différentes positions angulaires sur un mur.

6. Organe de raccord de robinetterie sanitaire suivant une des revendications 1-5, caractérisé en ce que la pièce de batterie (4) présente sur le côté des tuyaux d'entrée (8, 9) d'eau froide et chaude, un tuyau de sortie d'eau froide et chaude (8a, 9a), les axes médians de tous les tuyaux (8, 8a, 9, 9a) se situant dans un plan commun, qui s'étend transversalement à l'axe longitudinal de l'armature (7) (figure 12).

7. Organe de raccord de robinetterie sanitaire suivant une des revendications 1-6, caractérisé en ce que les deux espaces libres (12, 14) dans la pièce de batterie (4) sont agencés sur des côtés diamétralement opposés autour de son alésage (19) et les ouvertures (36, 38) dans l'armature (7) débouchent vers des côtés diamétralement opposés.

8. Organe de raccord de robinetterie sanitaire suivant une des revendications 1-7, caractérisé en ce que soit dans la pièce de batterie (4), soit dans la partie d'armature (7a) pénétrant dans celle-ci existe au moins une gorge annulaire (37, 39) dans laquelle débouche l'une des ouvertures d'entrée (36, 38) de l'armature (7).

9. Organe de raccord de robinetterie sanitaire suivant l'une des revendications 1-8, caractérisé en ce que les tuyaux (11, 13) sont recouverts dans le corps (5) par un couvercle (46) libérable accessible de l'avant.

10. Organe de raccord de robinetterie sanitaire suivant l'une des revendications 1-4, 6-9, caractérisé en ce que pour fixer le corps (5) sur un mur, il existe une bague de fixation (41) dont partent au moins une, de préférence deux attaches (2) diamétralement opposées, la bague de fixation pouvant être fixée par des vis (24) accessibles à partir d'une des faces frontales du corps, en différentes positions angulaires prédéterminées par rapport à une face frontale du corps.

11. Organe de raccord de robinetterie sanitaire, en particulier suivant une des revendications 1-10, caractérisé en ce qu'au moins la zone d'embouchure des tuyaux (11, 13) possède une forme non circulaire, en particulier de six-pan, une douille (50) placée dans l'arrivée ou le départ d'eau (8, 9) réalisé en tant que tuyau en matière synthétique souple (16) possède une forme non circulaire identique opposée, entre la surface frontale des tuyaux (11, 13) et une couronne annulaire (52) de la douille (50) est posée une bague d'étanchéité (56) et les deux parties (8, 9 ; 11, 13) sont rassemblées par un écrou à chapeau (10) (figure 9).

12. Organe de raccord de robinetterie sanitaire suivant l'une des revendications 1-11, caractérisé en ce que l'armature (7) présente une partie réalisée en tant que distributeur (73), qui s'engage dans la pièce de batterie (4), les ouvertures d'entrée (45, 47) débouchant dans des alésages longitudinaux (138, 140) de ce distributeur (73).

13. Organe de raccord de robinetterie sanitaire suivant la revendication 12, caractérisé en ce que le distributeur (73) est réalisé en tant que pièce distincte et peut prendre avec l'armature (7) deux positions décalées de 180°, les alésages longitudinaux (138, 140) du distributeur (73) s'alignant dans les deux positions avec les canaux longitudinaux (28, 30) de l'armature (7) (figure 17).

14. Organe de raccord de robinetterie sanitaire suivant la revendication 12 ou 13, caractérisé en ce que les canaux à eau froide et chaude (110, 112) se trouvant entre les tuyaux d'admission et de sortie (114, 188 ; 116, 120) sont disposés avec une configuration mutuellement parallèle en forme de U autour du fond (32) de la pièce de batterie (4), en outre les tuyaux d'admission et de sortie (114, 118 ; 116, 120) s'étendent co-axialement entre eux et transversalement à l'axe longitudinal de l'armature (7) (figures 14, 15, 19).

15. Organe de raccord de robinetterie sanitaire suivant l'une des revendications 12-14, caractérisé en ce que le distributeur est constitué par deux pièces partielles pouvant tourner l'une par rapport à l'autre de 180° (73, 153), la première pièce de distributeur (153) se trouvant en liaison d'écoulement avec deux canaux à eau mélangée (165, 167) de l'armature (7), qui sont disposés séparément en regard des canaux longitudinaux (28, 30) pour l'eau froide et chaude et sont parcourus en sens opposé, en ce que dans les deux parties (73, 153) du distributeur existent des gorges annulaires (124, 126 ; 174, 176) séparées l'une de l'autre dans le sens axial, dont celles d'une pièce partielle se trouvent en liaison de circulation avec les ouvertures d'admission (45, 47) pour l'eau froide et chaude et celles de l'autre pièce partielle (153) avec des ouvertures de sortie (162, 164) pour l'eau mélangée (figures 20-23).

16. Organe de raccord de robinetterie sanitaire suivant la revendication 12, caractérisé en ce que l'armature (7) et le ou les distributeurs (73, 153) sont réalisés en une pièce, les deux canaux longitudinaux (28, 30) débouchent dans une chambre frontale (184) de la pièce de batterie (4) et sélectivement l'un ou l'autre canal longitudinal (28, 30) peut être obturé par un bouchon fileté (188) et dans l'autre canal longitudinal, l'une ou l'autre ouverture de circulation débouchant dans la gorge annulaire (124) peut être obturée par un autre bouchon fileté (186) (figures 27, 28).

Fig.1

**Fig.2**

**Fig.3**

**Fig.4**

Fig. 5

Fig. 7

Fig. 6

4

Fig. 9

Fig. 10

Fig. 11

Fig. 12

Fig. 8

Fig. 13

0 119 960

Fig. 14

Fig. 15

Fig. 16

Fig. 17

Fig. 19

Fig. 18

Fig. 20

Fig. 21

Fig. 22

*Fig. 23*

0 119 960

Fig. 24

Fig. 25

Fig. 26

Fig. 27

Fig. 28